# EUROPEAN PATENT APPLICATION

(11) **EP 4 656 031 A1**
(43) Date of publication of application: **03.12.2025**
(21) Application number: 25173450.5
(22) Date of filing: 30.04.2025
(51) Int. Cl.: A01D 43/08, A01F 29/14

(54) **A FORAGE HARVESTER**

(30) Priority: 29.05.2024 GB 202407605
(71) Applicant: AGCO International GmbH, 8212 Neuhausen am Rheinfall (CH)
(72) Inventor: Waldmann, Stephan, Marktoberdorf (DE); BROCKMANN, Andreas, 87616 Marktoberdorf (DE)
(74) Representative: AGCO Intellectual Property Department

(57) **Abstract**

A processing system for a forage harvester comprises a cutting system for cutting crop material, a drive system for driving the cutting system and an accelerator for generating a flow of the cut crop material. A controllable flap is provided along the flow path between the cutting system and the accelerator, having an open position to allow relatively large objects to pass through and a closed position. A hydraulic circuit includes a primary hydraulic pump and a coupled hydraulic charge pump. A hydraulic actuator for controlling the position of the controllable flap is supplied with a supply pressure from the hydraulic charge pump. Furthermore, the flap is configured to move to its open position when the input power to the hydraulic circuit is interrupted. This provides a drive system for the flap with low energy requirement and with safe operation.

## Description

### FIELD

Embodiments of the present disclosure relate generally to forage harvesters.

### BACKGROUND

A forage harvester is designed to harvest and process forage crops such as corn, grass, and other similar crops for silage.

A forage harvester typically includes a header at the front of the forage harvester that gathers the crop from the field. Headers come in various types depending on the crop being harvested, such as corn headers, pickup headers for grass and small grains, or wide swath headers.

A cutter head is used to cut the crop as it is fed into the machine. It can have various configurations, such as rotary blades or flail-type knives, depending on the type of crop and the desired cut length.

A crop processor is typically used for further processing the harvested crop, for example with mechanisms for crushing, cracking, or shredding the crop to enhance its digestibility and nutritional value for livestock feed.

A crop conveyance system is used to transport the harvested crop from the cutting and processing components to the collection or distribution system of the harvester. It comprises augers, belts, and other mechanisms. An accelerator is used to assist in feeding the crop through the machine. It helps in breaking down the crop material and ensuring a consistent flow of material through the harvester.

The forage harvester typically has a collection and delivery system for overloading the processed forage into a further vehicle, which may be e.g. a loading wagon driven by a tractor,

It is known to provide an adjustable wear plate as part of the accelerator housing. EP 1 570 725 discloses the use of an adjustable wear plate for locally adjusting the diameter of the housing. By increasing the diameter, foreign objects can pass through the processing system.

The adjustable plate should be closed during harvesting and should be opened if the harvesting is stopped, for example because of a foreign object. Thus, there is a need for a simple automated way to control the adjustable plate. Furthermore, it would be desirable for this control to be as energy efficient as possible.

### BRIEF SUMMARY

The scope of this disclosure is defined by the claims.

According to examples in accordance with this disclosure, there is provided a processing system for a forage harvester, comprising: an input for receiving power from a prime mover; a cutting system for cutting crop material; a drive system for driving the cutting system; an accelerator for generating a flow of the cut crop material; a controllable flap along the flow path between the cutting system and the accelerator, having an open position to allow relatively large objects to pass through and a closed position; and a hydraulic circuit, wherein the hydraulic circuit comprises: a primary hydraulic pump and a coupled hydraulic charge pump, actuated by the power received at the input; and a hydraulic actuator for controlling the position of the controllable flap, wherein the controllable flap is configured to move to its open position when the input power received at the input is interrupted and wherein the hydraulic actuator is supplied with a supply pressure from from the hydraulic charge pump.

In this processing system, a flap is used to change the size of a passageway around the accelerator or chopper (or between the accelerator and chopper) of the forage harvester. The flap is hydraulically controlled to open and close, but in the absence of a supply line pressure, the flap automatically opens. Thus, as soon as the prime mover is halted, the flap automatically opens. This provides a simple automatic safety function. The supply to the hydraulic actuator of the flap is delivered by a charge pump. Thus, only a low actuation pressure is used, which provides power savings. The charge pump is used for the control of the primary hydraulic pump, so it is already present in the hydraulic circuit, and this avoids the need for an additional dedicated control pump for the hydraulic actuator.

While the cutting system is supplied with pressure, the hydraulic actuator is pressurized and keeps the flap closed for the harvesting operation. If the prime mover (engine) is stopped (stopping hydraulic supply in general) the oil in the flap hydraulic actuator returns to a tank so that the flap (by its weight) can move the hydraulic actuator to open the flap.

The hydraulic circuit for example further comprises one or more hydrostatic drive motors driven by the primary hydraulic pump.

The charge pump is thus integrated with a driveline pump for driving one or more hydrostatic drive motors. The driveline pump is for example a variable displacement high pressure pump, whereas the charge pump is configured as a constant displacement pump to constantly deliver fluid at a low pressure level. The charge pump serves to enable adjustment of the primary pump (which adjustment requires hydraulic fluid at low pressure).

The hydraulic circuit for example further comprises belt tensioning cylinders supplied with pressure by the charge pump. The hydraulic circuit for example further comprises a hydraulic park brake system, supplied by the charge pump. Thus, the charge pump used for driving the hydraulic cylinder may have other functions as well.

The cutting system for example comprises a chopping drum. The chopping drum may comprise a central drum and and an outer housing around the drum, wherein the controllable flap comprises a portion of the outer housing. Thus, the flap is formed as part of the design of the chopper drum.

The flap may comprise an outer flap support portion and an inner flap wear portion, and wherein the outer housing adjacent to the flap comprises a fixed outer support portion and a fixed inner wear portion. This enables wearing parts to be replaced.

Along a circumferential direction around drum, the fixed inner wear portions may overlap the outer flap support portion. In this way, the flap has a mechanical stop.

The flap is preferably configured to move to its open position under gravity, in response to a sufficient drop in supply line pressure to the hydraulic actuator. The drive system preferably comprises a belt drive. The hydraulic actuator preferably comprises a hydraulic cylinder.

This disclosure also provides a forage harvester comprising: a prime mover; a header; and the processing system as defined above for processing the crop material received from the header.

The forage harvester may further comprise a delivery spout for receiving the processed crop material.

### BRIEF DESCRIPTION OF THE DRAWINGS

One or more embodiments of this disclosure will now be described, by way of example only, with reference to the accompanying drawings, in which:
Fig. 1 shows a forage harvester;
Fig. 2 shows the processing system in more detail including a release flap;
Fig. 3 shows a hydraulic circuit of the forage harvester;
Fig. 4 shows the flap design in more detail;
Fig. 5 shows an inside view of the duct including the flap; and
Fig. 6 shows an outside view of the duct including the flap; and

### DETAILED DESCRIPTION

The subject matter of this disclosure will be described with reference to the Figures.

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure provides a processing system for a forage harvester that comprises a cutting system for cutting crop material, a drive system for driving the cutting system and an accelerator for generating a flow of the cut crop material. A controllable flap is provided along the flow path between the cutting system and the accelerator, having an open position to allow relatively large objects to pass through and a closed position. A hydraulic circuit includes a primary hydraulic pump and a coupled hydraulic charge pump. A hydraulic actuator for controlling the position of the controllable flap is supplied with a supply pressure from the hydraulic charge pump. Furthermore, the flap is configured to move to its open position when the input power to the hydraulic circuit is interrupted. This provides a drive system for the flap with low energy requirement and with safe operation.

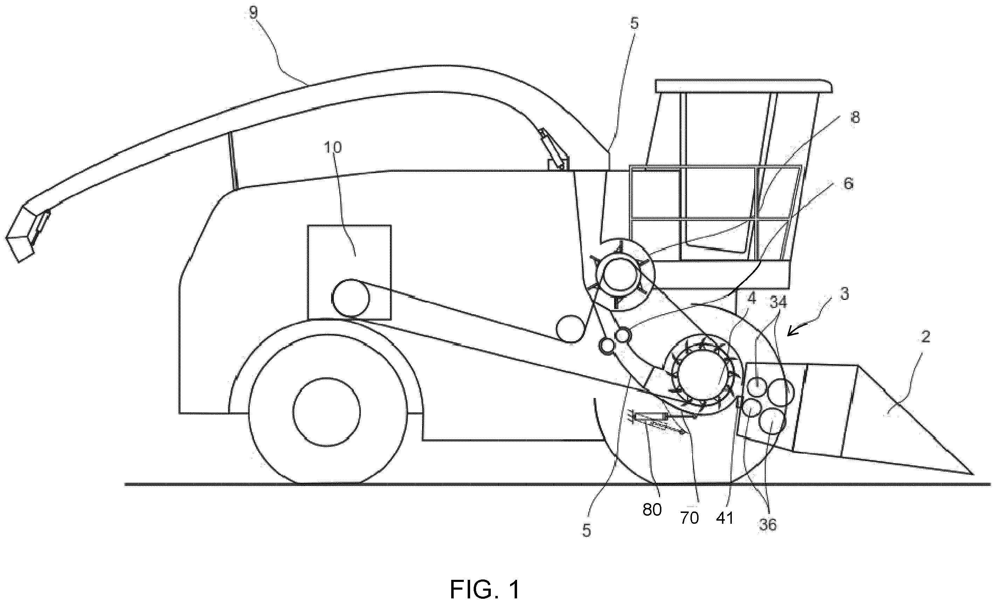

Figure 1 shows a forage harvester to which the flap design and hydraulic circuit design of this disclosure may be applied. The forage harvester is provided with a front attachment 2 such as a header which contains cutting equipment for cutting and harvesting a crop. The cut crop is fed from the header via associated feed rollers 34,36 in a housing 3 to a cutting system in the form of a chopper drum 4 where the crop is chopped into smaller pieces between the cutting system 4 and an associated shear bar 41. The chopped crop passes through a duct 5 and is optionally directed into a cracker unit 6 where the crop is further crushed and threshed. The harvested crop is then blown upwards along the duct 5 by an accelerator 8 and exits through a spout 9 directing the processed crop into a trailer or other vehicle moving alongside the forage harvester.

The forage harvester has a prime mover, namely a primary power source such as an internal combustion engine.

Figure 1 also shows a controllable flap 70 along the flow path between the cutting system 4 and the accelerator 8, having an open position to allow relatively large objects to pass through the accelerator and a closed position. The flap is controlled by a hydraulic actuator 80 which forms part of a hydraulic circuit of the forage harvester.

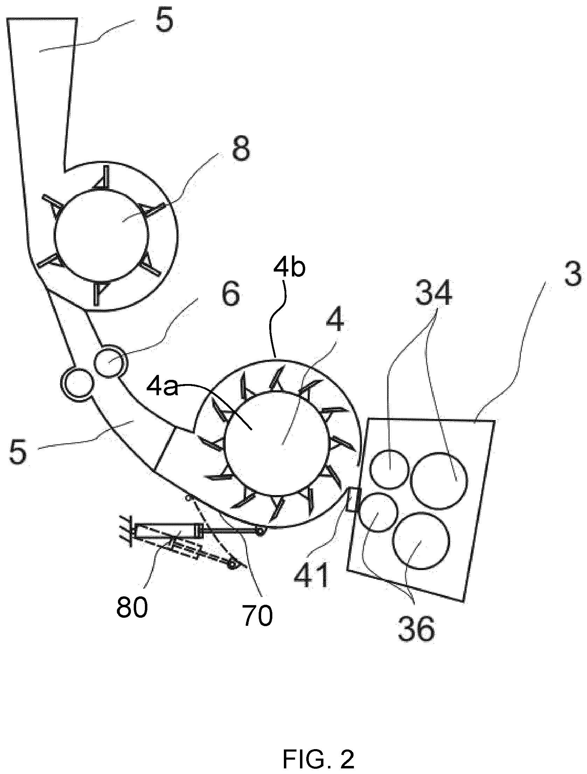

Figure 2 shows the crop processing parts in more detail, with the same reference numbers as in Figure 1.

The chopping system comprises a central chopper drum 4a and and an outer housing 4b around the drum, wherein the controllable flap comprises a portion of the outer housing 4b. When open (shown dotted in Figure 2), large debris can escape from the chopper drum through the opening formed by the open flap. This is only one example. The flap may be located at other positions along the flow path, for example at the accelerator or between the chopper and the accelerator.

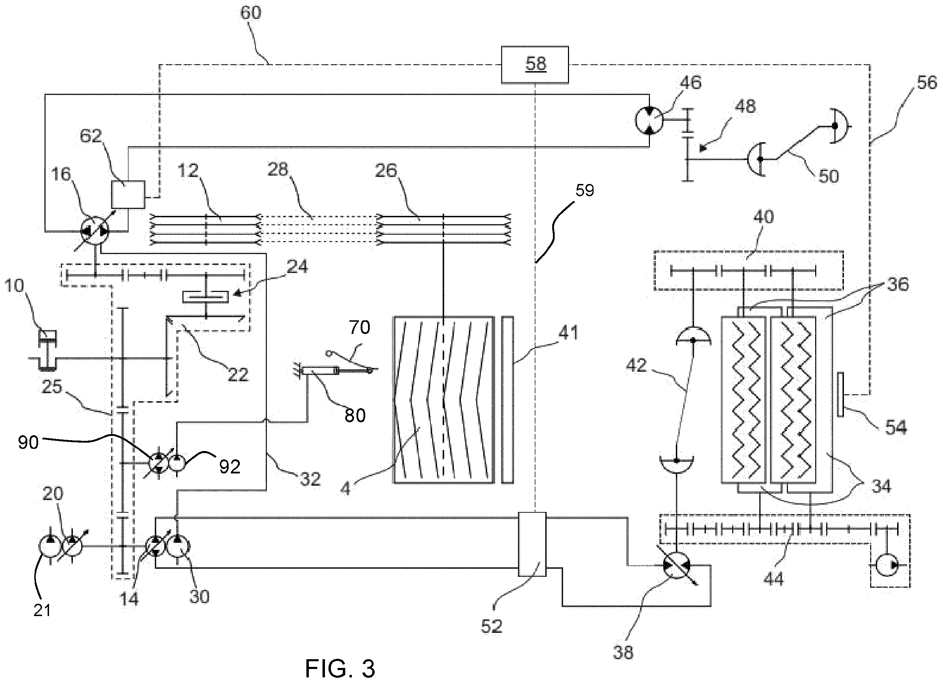

Figure 3 shows in diagrammatic form the electronic and hydraulic elements of a drive system for elements of the forage harvester.

The prime mover (engine) 10 drives various mechanical outputs, such as a first pulley 12, and hydraulic pumps 14, 16, 20, 30, 90,92 by way of a transmission including an output gear 22 and a disengageable clutch 24 provided within a housing 25. Some of the outputs of the clutch 24 can be switched on or off during operation of the prime mover. In the illustrated embodiment, a first hydraulic pump 16 and first pulley 12 are switched via the clutch 24, while others of the hydraulic pumps 14, 20, 30, 90, 92 are driven continuously.

The chopper drum 4 is driven by a second pulley 26 fixed rotationally to the chopper drum 4. A drive belt 28 between the first pulley 12 and the second pulley 26 enables the chopper drum 4 to be driven by the prime mover while the clutch 24 is engaged.

As will be understood, the chopper drum 4 has a large mass which together with the speed of rotation leads to a long run out of the chopper drum when the clutch 24 is disengaged, that is, in the absence of braking of the chopper drum it takes an undesirably long time for the chopper drum to come to rest. Typical run-down times for an unbraked chopper drum are around 50 seconds. During this time, the rotating chopper drum presents a potential danger, for example, to an operator seeking to clear a blockage.

A second hydraulic pump 14 is a swash plate variable displacement pump for closed circuits. Pump 14 is in communication with internal charge pump 30.

First hydraulic pump 16 is a swash plate variable displacement pump for closed circuits without an additional charge pump.

Internal charge pump 30 supplies both the first hydraulic pump 16 and the second variable displacement pump 14 with charge pressure. First hydraulic pump 16 is fed by a line 32 extending from charge pump 30 to the first hydraulic pump 16. In this example, the single charge pump 30 is shared between the first and second hydraulic pumps 16,14 but this is merely an example.

Lower and upper sets of feed rollers 34,36 are also driven by the hydraulic system. Variable displacement pump 14 conveys an oil flow, the quantity of which can be adjusted, to a bent axis displacement motor 38 which drives a lower roller gear set 44. A set of two lower feed rollers 36 are driven via a gear chain in the lower roller gear set 44.

A cardan shaft 42 drives an upper roller gear set 40 which drives a set of two upper feed rollers 34 via a gear chain.

The speed of the hydraulic motor 38 and the resulting speed of the upper and lower feed rollers 34,36 can be adjusted over a wide range by the combination of the second variable displacement pump 14 and the variable displacement motor 38. Such a good range of adjustability advantageously results in a large range of cutting length without the need for additional cutting length gear. Since the second variable displacement pump 14 is driven continuously, this enables the reversal of the direction of rotation of the feed rollers 34,36, even where the chopper drum 4 is clogged and so blocked from rotation.

The first variable displacement pump 16 promotes an oil flow, the amount of which can be adjusted, to a bent axis constant motor 46 which is also used to drive a header gear 48 in turn driving the header via a cardan shaft 50. Since a relatively small speed spread of 1:3 is needed for the harvesting attachment 2, the hydraulic motor 46 can be designed as a constant motor.

Both circuits (between pump 16 and motor 46 and between pump 14 and variable displacement motor 38) can change the direction of rotation of the associated oil motors 38,46 by reversing the direction of the oil flow in the pumps 14,16 thus enabling the feed rollers 34,36 and the header to be reversed, for example to allow removal of blockages.

By way of example, the pump 20 may be used for driving a front linkage of the forage harvester, operating the spout, folding a corn header and controlling a rear hitch. Pump 21 for example supplies the brakes and steering. Pump 21 for example is a gear pump.

A quick stop valve 52 is provided in the feed roller circuit. If a ferromagnetic body is drawn into the feed rollers, this is detected by a sensor 54. A reporting signal is sent to an electronic control unit 58, for example via a signal line 56. While a signal line 56 is illustrated it will be understood that this signal line (and the others referred to in this description) may take any suitable form and include a wireless communication route. On receipt of such a reporting signal the electronic control unit 58 issues a signal to actuate the quick stop valve 52, for example via a signal line 59. As a result of actuation of the quick stop valve 52 the feed motor 38 is stopped immediately and the associated stopping of the feed rollers 34,36 prevents the foreign body from reaching the chopper drum 4 and causing damage there. Such quick stop valves are known in the art (for example as disclosed in EP2557911) and will not be described further.

In accordance with this disclosure, the hydraulic circuit includes a primary hydraulic pump 90 (which may be one of multiple primary pumps) and a coupled hydraulic charge pump (which may also be one of multiple charge pumps), and the charge pump is used for providing the supply pressure to the hydraulic actuator 80 to control the position of the flap 70.

In the example of Figure 3, a primary pump 90 is shown together with a charge pump 92 that connects to the hydraulic actuator 80.

The primary pump 90 is for example used for driving or more hydrostatic drive motors and thus comprises a driveline pump. It supplies the fluid for the ground drive motors, which are not shown. For example, there may be two ground drive motors for the front and one ground drive motor for the back.

The primary hydraulic pump for example comprises a variable displacement and high-pressure pump.

The charge pump preferably comprises a constant displacement pump. The charge pump 92 is thus, in this example, integrated with a driveline pump for driving the one or more hydrostatic drive motors. The charge pump is configured to constantly deliver fluid at a low pressure level.

By way of example, a low pressure pump in this context may have an operating pressure of tens of bar such as 20 to 30 bar (2 to 3 MPa), a medium pressure pump for example has an operating pressure of around 200 bar (20 MPa), and a high pressure pump a pressure may have an operating pressure in the range 450 to 500 bar (45 to 50 MPa).

The charge pump serves to enable adjustment of the primary pump to control the variable displacement function. In particular, the charge pump ensures that the variable displacement pump always has a sufficient supply of hydraulic fluid at the necessary pressure. Variable displacement pumps, particularly axial piston pumps, require a consistent and adequate supply of fluid to function correctly. Variable displacement pumps also often operate in closed-loop systems, where fluid recirculates between the pump and the actuator. The charge pump maintains a positive pressure in the low-pressure side of this loop. This preloading helps the pump respond quickly to changes in demand and ensures that it can smoothly transition between different displacement settings. A charge pump is also used to compensate for leakage losses by continuously replenishing the fluid in the system, maintaining the required pressure and volume.

The flap is configured to move to its open position when the input power is interrupted, and hence when the output pressure from the charge pump drops. It does this under the influence of gravity. Thus, the open position of the flap has a center of gravity of the flap that is vertically lower than in the closed position. The pressure supplied by the charge pump is used to provide a lifting force to overcome the gravitational force (and other downward forces on the flap resulting from the crop processing).

When the engine is stopped (stopping the hydraulic supply in general) the oil in the flap hydraulic actuator 80 returns to a tank when the flap opens under gravity.

The charge pump 92 may be used for performing other low pressure functions such as supplying belt tensioning cylinders and/or a hydraulic park brake system.

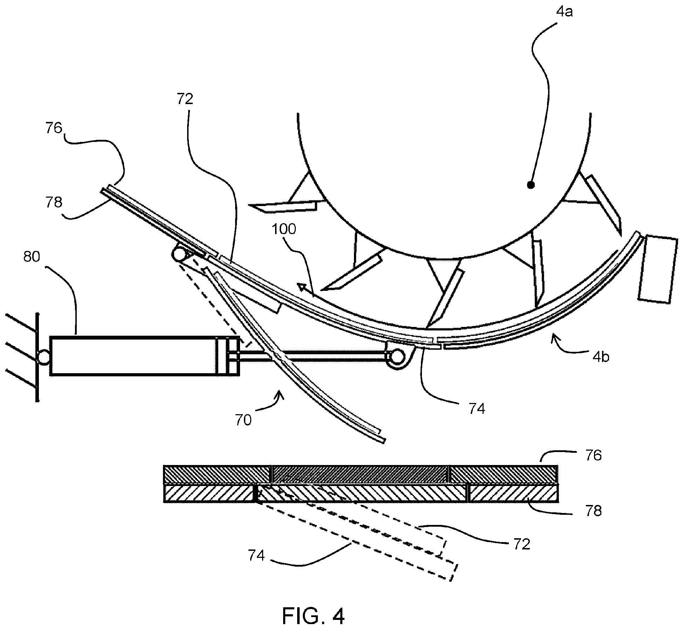

Figure 4 shows an example of the design of the flap 70 in more detail.

The flap comprises an outer flap support portion 74 and an inner flap wear portion 72. The support portion 74 is larger in area than the wear portion 72. The outer housing 4b, at least adjacent the flap, comprises a fixed outer support portion 78 and a fixed inner 76 wear portion. The wear portion 76 is larger in area than the support portion 78 so that there is a step defined between them.

In this way, when the flap is closed, the two larger area portions butt against each other to define a fixed closure position, independent of the actuator. The flap cannot be moved further towards the drum 4a as a result of the overlap design. The overlap is for example in the circumferential direction around the drum, i.e. in the direction of crop flow as shown by arrow 100.

The wear portions 72,76 may for example be disassembled and replaced.

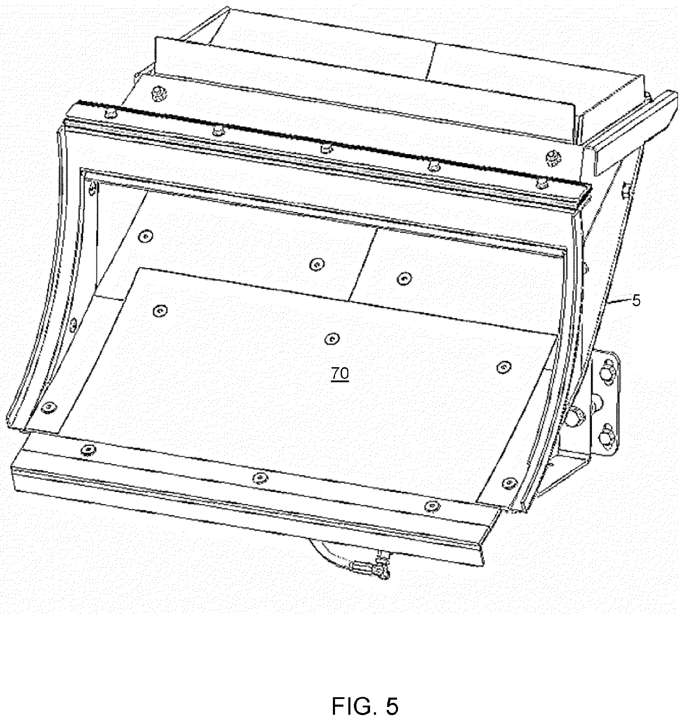

Figure 5 shows the inner surface of the duct between the chopper drum and the accelerator, where the flap 70 is located.

The flap may be around the chopper drum as shown above, or it may be along the duct further towards the accelerator, or it may be around the accelerator. Thus, the flap may be provided anywhere along the flow path between (and including) the chopper drum (or more generally the cutting system) and the accelerator.

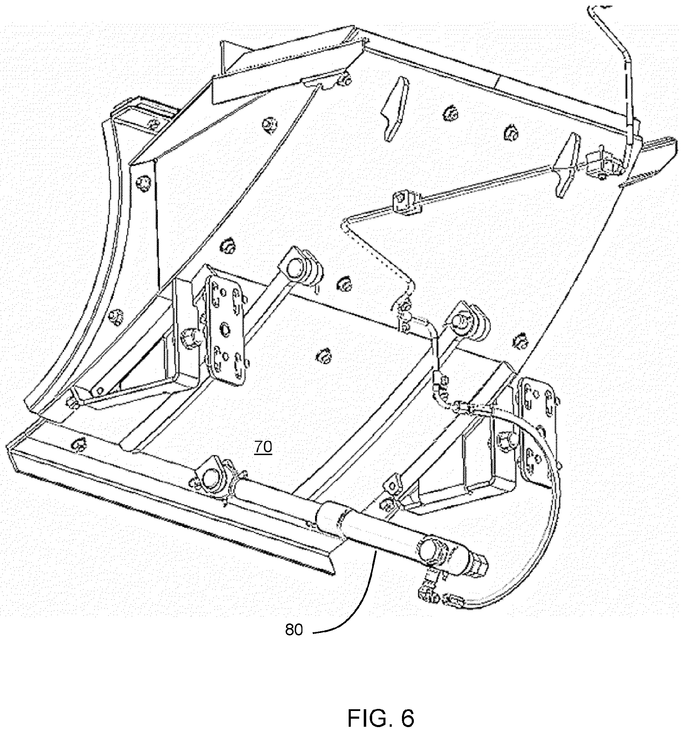

Figure 6 shows the underside of the duct where the flap 70 is located and shows the hydraulic actuator 80 which is situated beneath the flap. The hydraulic actuator comprises a hydraulic cylinder that is extended by the applied hydraulic pressure (from the charge pump) in order to lift the flap 70 into its closed position.

In the example above, a charge pump 92 is shown to provide the supply to the hydraulic actuator 80. However, other charge pumps shown in Figure 3 may be used instead, such as the charge pump 30.

The charge pump used to supply the hydraulic actuator needs to release pressure when the engine is turned off, and it needs to operate at low pressure to provide an energy efficient operation of the flap. Thus, other charge pumps in the hydraulic circuit may be suitable. For example, instead of charge pump 92, charge pump 30 may be used to supply the hydraulic actuator.

The example above shows only a single flap located at the chopper. However, the flap may instead be located at the accelerator, between a cracker and the accelerator, between a cracker and the chopper, between the accelerator and the spout or at the spout itself. Thus, the controllable flap may be located anywhere along the process flow to the spout. Furthermore, multiple flaps may be used at a combination of these possible locations.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

Variations to the disclosed embodiments can be understood and effected by those skilled in the art in practicing the subject matter of this disclosure, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

Any reference signs in the claims should not be construed as limiting the scope.

All references cited herein are incorporated herein in their entireties. If there is a conflict between definitions herein and in an incorporated reference, the definition herein shall control.

## Claims

1. A processing system for a forage harvester, comprising:
an input for receiving power from a prime mover (10);
a cutting system (4) for cutting crop material;
a drive system (12,26,28) for driving the cutting system;
an accelerator for generating a flow of the cut crop material;
a controllable flap (70) along the flow path between the cutting system and the accelerator, having an open position to allow relatively large objects to pass through and a closed position; and
a hydraulic circuit, wherein the hydraulic circuit comprises:
a primary hydraulic pump (90) and a coupled hydraulic charge pump (92), actuated by the power received at the input; and
a hydraulic actuator (80) for controlling the position of the controllable flap,
wherein the controllable flap (70) is configured to move to its open position when the input power received at the input is interrupted and wherein the hydraulic actuator is supplied with a supply pressure from from the hydraulic charge pump (92).

2. The system of claim 1, wherein the hydraulic circuit further comprises one or more hydrostatic drive motors driven by the primary hydraulic pump

3. The system of claim 1 or 2, wherein the primary hydraulic pump comprises a variable displacement pump

4. The system of any one of claims 1 to 3, wherein the hydraulic circuit further comprises belt tensioning cylinders supplied with pressure by the charge pump.

5. The system of any one of claims 1 to 4, wherein the hydraulic circuit further comprises a hydraulic park brake system, supplied by the charge pump

6. The processing system of any one of claims 1 to 5, wherein the cutting system comprises a chopping drum.

7. The processing system of claim 6, wherein the chopping drum comprises a central drum and an outer housing around the drum, wherein the controllable flap comprises a portion of the outer housing.

8. The processing system of claim 7, wherein the flap comprises an outer flap support portion and and inner flap wear portion, and wherein the outer housing adjacent the flap comprises a fixed outer support portion and a fixed inner wear portion.

9. The processing system of claim 8, wherein, along a circumferential direction around drum, the fixed inner wear portions overlap the outer flap support portion.

10. The processing system of any one of claims 1 to 9, wherein the flap is configured to move to its open position under gravity, in response to a sufficient drop in supply line pressure to the hydraulic actuator.

11. The processing system of any one of claims 1 to 10, wherein the drive system comprises a belt drive.

12. The processing system of any one of claims 1 to 11, wherein the hydraulic actuator comprises a hydraulic cylinder.

13. A forage harvester comprising:
a prime mover (10);
a header; and
the processing system of any one of claims 1 to 12 for processing the crop material received from the header.

14. The forage harvester of claim 13, further comprising a delivery spout for receiving the processed crop material.
